# EUROPEAN PATENT APPLICATION

(11) **EP 2 939 983 A1**
(43) Date of publication of application: **04.11.2015**
(21) Application number: 14166397.1
(22) Date of filing: 29.04.2014
(51) Int. Cl.: C02F 1/72, C02F 1/66

(54) **Titanium dioxide-catalysed oxidation method**

(71) Applicant: Sistiana Inversiones S.L., 28001 Madrid (ES)
(72) Inventor: Domínguez Sánchez, Luis, 28049 Madrid (ES); Gallego-Iniesta García, M. Paz, 28049 Madrid (ES)
(74) Representative: ABG Patentes, S.L.

(57) **Abstract**

The invention refers to a method for the oxidation of organic or inorganic substrates in the presence of a heterogeneous titanium dioxide catalyst, an organic peroxide or hydrogen peroxide and an acid, wherein the pKa of the acid is 3 or lower. The method of the invention may advantageously be employed in the degradation of contaminants in fluids, in the desulfurization and denitrogenation of oils and fuels, in the bleaching of fibres, in the improvement of the whiteness and/or appearance of food, etc.

## Description

### FIELD OF THE INVENTION

The present invention concerns an oxidation method employing a heterogeneous (TiO₂) catalyst and applications of said method, including its use in the degradation of contaminants in fluids, desulfurization and denitrogenation of oils and fuels, bleaching of fibres, improvement of the whiteness and/or appearance of food, etc.

### BACKGROUND

Methods for oxidising substrates, such as pollutants, are vastly known and vary greatly in their nature, finding widespread applications in industry, e.g. in the purification of wastewater, desulfurization and denitrogenation of oils and fuels or bleaching of fibres, among others.

Out of said methods of oxidation, those based on transition-metal catalysis represent an important subgroup of particular interest.

Classical transition-metal catalysed oxidations make use of homogenous iron catalysts and hydrogen peroxide. The industrial applicability of these classical reactions is however somewhat limited for a number of reasons, for example in that the oxidation requires high amounts of iron to be effective, which in most cases implies a further iron-removal treatment of the de-contaminated solution.

Alternative oxidation methods for overcoming the drawbacks of classical systems are continuously being studied in view of their great potential industrial applicability in the above mentioned fields. Alternatives to said classical systems include the use of heterogeneous catalysts consisting of non-iron transition metal species alone or in combination with iron, or the use of external energy sources such as UV-visible radiation or ultrasounds to promote oxidation.

TiO₂ is the natural oxide of titanium. TiO₂ is commonly used in the oxidation of substrates as a catalyst activated in presence of UV light and often in the presence of an oxidizing agent such as H₂O₂.

Reported methods of oxidation employing TiO₂ as a catalyst are generally described to be most efficient in neutral or basic media. Singh et al. (Iranian Journal of Environmental Health, Science & Engineering, 2013, 10:13) explore the effect of pH in the degradation of wastewater pollutants employing TiO₂ and H₂O₂ among other reaction conditions, and conclude that the optimal pH for the TiO₂-catalysed oxidation is in the alkaline range. This observation is reinforced by the findings of Gota et al. (International Journal of Current Engineering and Technology, 2014, 4 (1), 156-159), Jain et al. (Journal of Environmental Management, 2007, 85(4), 956-964) and several others.

In accordance with the above, the use of acids in TiO₂-catalysed oxidations is generally limited to specific purposes such as catalyst doping, as described in WO2011080080, or to increasing the solubility of substrates to be oxidised, e.g. the mixture H₂O₂/acetic acid has been employed to solubilise lignin in delignification processes.

It would therefore be desirable to obtain alternative, efficient methods of oxidation under heterogeneous TiO₂ catalysis, such that the plethora of oxidation methods available to the above mentioned industries in enriched.

### BRIEF DESCRIPTION OF THE INVENTION

The present inventors have surprisingly found a method for oxidizing substrates in the presence of a heterogeneous TiO₂-catalyst under acidic conditions, particularly by strongly acidic conditions, said oxidation method being useful *inter alia* for the removal of organic and/or inorganic pollutants from fluids.

In particular, one aspect of the present invention relates to a method for oxidizing a substrate, said method comprising the use of:
- a heterogeneous titanium dioxide catalyst;
- a hydrogen peroxide or an organic peroxide; and
- an acid, wherein the pKₐ of the acid is about 3 or lower.

Additionally, the method of oxidation of the present invention does not require necessarily the presence of light. Therefore, in another embodiment, the oxidation takes place in the absence of light.

Advantageously, the method of oxidation of the present invention allows achieving good oxidation rates even when employing small quantities of hydrogen peroxide or the organic peroxide, or even when employing small amounts of catalyst in the system. In accordance with this, in a further embodiment of the present invention, the amount of titanium dioxide catalyst, expressed as surface area in the system, may be even in the range from 10 to 1000 m²/L. In other embodiments, large amounts of catalyst are needed and then the use of dispersing agents may allow increasing the surface area without agglomeration, it thus being possible to reach amounts of titanium dioxide in the system in the range from 5,000 to 1,000,000 m²/L.

According to a preferred embodiment, the acid with a pKₐ of about 3 or lower is a mineral acid (also known as inorganic acid). Said mineral acid is preferably selected from the group consisting of hydrochloric acid, sulfuric acid and nitric acid.

The inventors have further observed that the method of oxidation of the present invention is enhanced under systems which are highly oxygen-saturated. Therefore, in a particular embodiment, the oxidation takes place in a system which is from 80% to 100% oxygen-saturated.

Another aspect of the present invention refers to the use of the oxidation method of the invention for the degradation of organic and/or inorganic compounds in wastewater.

Another aspect of the invention refers to the use of the oxidation method of the invention for oxidative desulfurization or denitrogenation.

Yet another aspect of the invention refers to the use of the oxidation method of the invention for bleaching organic and/or inorganic fibres.

Another aspect of the invention refers to the use of the oxidation method of the invention for improving the whiteness and/or appearance of food.

Yet another aspect of the invention refers to the use of the oxidation method of the invention for selective oxidation of hydrocarbons.

Another aspect of the invention refers to the use of the oxidation method of the invention for improving the whiteness and/or appearance of teeth.

The above aspects and preferred embodiments thereof are additionally defined hereinafter in the detailed description, as well as in the claims.

### BRIEF DESCRIPTION OF THE FIGURES

Figure 1: Comparative study of dissolved O₂ influence on kinetics of reaction. Reaction kinetics or Rhodamine B degradation when not supplying O₂ to the reaction mixture (depicted in gray, values plotted with squares) vs reaction kinetics when supplying O₂ (depicted in black, values plotted with diamonds). Conditions: 5% H₂O₂, 10g/L TiO₂ (aeroxide P90), pH=3 (HCl), 0.025 mM Rhodamine B.
Figure 2: Whiteness of paper according to a blank test compared to paper obtained after applying the method of the invention.
Figure 3: FTIR spectrum of sulfur-containing samples treated with: a) H₂O₂ + HNO₃ + TiO₂; b) H₂O₂ + TiO₂; c) no treatment.

### DETAILED DESCRIPTION OF THE INVENTION

As noted previously, the present invention relates to a method for oxidizing a substrate, said method comprising the reaction of a heterogeneous titanium dioxide catalyst, a hydrogen peroxide or an organic peroxide, and an acid, wherein the pKₐ of the acid is about 3 or lower.

In the context of the present invention, the following terms have the meaning detailed below.

As used herein, the term "about" means a slight variation of the value specified, preferably within 10 percent of the value specified. Nevertheless, the term "about" can mean a higher tolerance of variation depending on for instance the experimental technique used. Said variations of a specified value are understood by the skilled person and are within the context of the present invention. Further, to provide a more concise description, some of the quantitative expressions given herein are not qualified with the term "about". It is understood that, whether the term "about" is used explicitly or not, every quantity given herein is meant to refer to the actual given value, and it is also meant to refer to the approximation to such given value that would reasonably be inferred based on the ordinary skill in the art, including equivalents and approximations due to the experimental and/or measurement conditions for such given value.

As used herein, a TiO₂ catalyst refers to any catalyst, in powder or structured, containing TiO₂ molecules alone or in combination with other catalytic or non-catalytic particles.

Illustrative non-limiting examples of other catalytic particles include metals, oxides, sulfurs, perovskites, zeolites and salts of elements of group IB, IIB, IIIB, IVB, VB, VIB, VIIB and VIIIB of the periodic table.

A TiO₂ catalyst according to present invention also refers to doped TiO₂ catalysts. It is contemplated by the present invention that two or more individual metals or metal complexes may be used to dope the TiO₂ catalyst. Examples of dopants suitable for use as part of the TiO₂ catalysts include, but are not limited to, metals from groups IVB, VB, VIB, VIIB, VIIIB and IVA of the periodic table, lanthanoids such as Lanthanum (La) and Cerium (Ce), metal oxides of hafnium (Hf),zirconium (Zr), cerium (Ce), titanium (Ti), vanadium (V), tungsten (W), molybdenum (Mo), manganese (Mn), iron (Fe), osmium (Os), rhodium (Rh), ruthenium (Ru), iridium (Ir), palladium (Pd), platinum (Pt), lead (Pb), tin (Sn) or silicon (Si), carbon (C), nonmetals such as phosphorus (P), nitrogen (N), selenium (Se), sulfur (S) or halides, homopolymers or copolymers of defined, block or random composition which comprise microcrystalline cellulose, polyolefins, polysaccharides, polyamides, polyurethanes, siloxanes, polythiophene, polynitrile, polyesters, graphite or graphene.

Methods to dope TiO₂ catalysts include, but are not limited to, acid treatment, ion-assisted sputtering, ion-implantation, chemical vapor deposition, sol-gel or plasma techniques or a combination thereof.

The TiO₂ catalyst of the present invention may be used as a dispersed or film catalyst. The TiO₂ catalyst of the present invention may also be used supported on an inorganic material such as silica gel, alumina, silica-alumina, zeolites, activated carbon or combinations of the same. The TiO₂ catalyst of the present invention may also be supported on polymers such as polysulfone, polyacrylonitrile, polystyrene, polyester terephthalate, polyurethane, polyaniline or combinations of the same.

TiO₂ catalysts with different specific surface areas are available and may be used in the present invention. In a particular embodiment, the TiO₂ catalyst may have a specific surface area in the range from 10 to 1,000 m²/g.

Although all three crystalline mineral forms of TiO₂, i.e. anatase, rutile and brookite, as well as amorphous TiO₂, or mixtures thereof may be used for the purposes of the present invention, preferably the TiO₂ is predominantly in the anatase or rutile form. By predominantly it is meant that at least about 40% of the TiO₂ particles are in a particular form. According to preferred embodiments, at least about 50%, 60%, 70%, 80% or 90% of the TiO₂ particles are in the anatase or rutile form. More preferably, over about 99% of the TiO₂ is in the anatase or rutile form.

Additionally, the anatase or rutile form of TiO₂ preferably predominantly displays a hydroxylated surface. The term hydroxilated surface refers to the capability of some TiO₂ surfaces to adsorb H₂O dissociatively. By predominantly it is meant that at least about 40% of the TiO₂ surface is hydroxylated. According to preferred embodiments, at least about 50%, 60%, 70%, 80% or 90% of the catalyst surface is hydroxylated. More preferably, over about 99% of the catalyst surface is hydroxylated.

Additionally, the anatase or rutile form of TiO₂ can display a surface with Lewis-acid sites, i.e. the sites on the catalyst act as Lewis acids. According to preferred embodiments, at least about 10%, 20%, 30% or 40% of the catalyst surface represents Lewis-acid sites. More preferably, over about 99% of the catalyst surface represents Lewis-acid sites.

Additionally, the anatase or rutile form of TiO₂ can display a surface with low coordination sites. A low coordination site refers to sites on the catalyst, primarily Ti atoms, which exist in a low coordination state and may therefore coordinate further atoms or ligands. According to preferred embodiments, at least about 1%, 5%, 10% or 20% of the catalyst surface represents low coordination sites. More preferably, over about 99% of the catalyst surface represents low coordination sites.

TiO₂ catalysts displaying different percentages of a surface with low coordination sites or Lewis-acid sites or hydroxylated surface or mixtures thereof are commercially available. The methods for growing TiO₂ anatase or rutile crystals which predominantly display low coordination sites or Lewis-acid sites or hydroxylated surface or mixtures thereof are known to the person skilled in the art

The TiO₂ catalyst used in the present invention may also be in the form of nanocrystals, although microcrystals and larger crystals are also contemplated herein.

The quantity of catalyst employed can vary over a wide range but in general it includes a catalytically effective quantity of TiO₂, herein expressed as surface area in the system, which gives a suitable and reasonable reaction rate. The TiO₂ catalyst of the present invention may have a surface area in the system in the range from 10 to 1,000,000 m²/L, particularly in the range from 100 to 10,000 m²/L, and more particularly in the range from 500 to 4000 m²/L.

Generally, the use of a small amount of catalyst is desired. Advantageously, the rate of oxidation of the present invention is greatly influenced by the pH of the reaction medium, such that under acidic, particularly strongly acidic conditions a good level of oxidation may be achieved even when employing small amounts of catalyst or oxidizing agent. The oxidation method of the present invention therefore does not solely rely on increasing concentrations of catalyst and/or oxidizing agent to achieve increased oxidation. Accordingly, advantageously, in a particular embodiment of the present invention, the TiO₂ catalyst may have a surface area in the system in the range from 10 to 1,000 m²/L, preferably in the range from 10 to 500 m²/L, or even in the range from 10 to 100 m²/L.

In a particular embodiment of the present invention, the rate of oxidation is increased by reducing the pH of the oxidation with an acid with a pKₐ of about 3 or lower without altering the amount of catalyst and peroxide (hydrogen peroxide or organic peroxide).

However, in other cases, the use of large amounts of catalyst may be needed. Then, the use of dispersing agents may allow increasing the surface area without agglomeration of the catalyst particles, Therefore, advantageously, in a particular embodiment of the invention the method of oxidation additionally comprises the use of a dispersing agent and the surface area of titanium dioxide catalyst in the system is in the range from 5,000 to 1,000,000 m²/L, particularly in the range from 10,000 to 1,000,000 m²/L.

As mentioned above, dispersing agents may additionally be employed in the oxidation of the invention in order to avoid agglomeration of the TiO₂ particles and a reduction or standstill in the rate of oxidation upon increasing the amount of catalyst. Exemplary dispersing agents suitable for use in the oxidation of the present invention include, but are not limited to, tetrahydrofuran (THF), sodium hexametaphosphate (SHMP), sodium dodecyl sulfate (SDS), polyacrylic acid or any of its salts, ethylene glycol, polyethylene glycol, polyethylene pyrrolidone, 4,5-dihydroxy-1,3-benzenedisulfonic acid disodium salt, sodium citrate, sodium ascorbate and commercial dispersants such as Dolapix CA, Dalais PC21, Reotan LA, PEI, Dolapix A88, KV9021, Dolapix ET85, Dolapix PC80, Dolapix CE64, Tiron or combinations thereof.

The TiO₂ catalyst may also include activated titanium particles in order to improve the catalytic properties of the catalyst before the addition of the hydrogen peroxide or the organic peroxide. "Activated" as used herein means that at least part of the titanium particles on the surface of the catalyst has undergone the formation of radicals. Non-limiting examples of activated titanium particles include titanium-µ-peroxide complexes, titanium-η-peroxide complexes or titanium-η²-peroxide complexes. Methods of catalyst activation include, but are not limited to, treatment of the catalyst with ultraviolet light (UV), ultrasounds, microwaves, gamma radiation or liquid phase plasma treatment, cavitation, or combinations thereof.

However, advantageously, in the present invention the catalyst may be activated solely by treating it with H₂O₂ or the organic peroxide, i.e. activation of the catalyst may take place in the absence of any external source of energy such as ultraviolet light (UV), ultrasounds, microwaves, gamma radiation or other means of catalyst surface activation.

Additionally, the TiO₂ of the present invention may be reused to minimize costs.

The method of oxidation of the present invention takes place in the presence of H₂O₂ or an organic peroxide, which are the oxidizing agents of the reaction. Illustrative non-limiting examples of organic peroxides are methyl ethyl ketone peroxide, t-butyl peroxide, dicumyl peroxide, dibenzoyl peroxide, di-t-butyl peroxide, lauryl peroxide, t-butyl perbenzoate, hydroperoxides (such as t-butyl hydroperoxide, cumyl hydroperoxide, ethylbenzene hydroperoxide). Use of a combination of more than one peroxide is advantageous in certain circumstances, although generally just one peroxide is used.

The quantity of H₂O₂ or organic peroxide employed can vary over a wide range but in general it includes an effective quantity which gives a suitable and reasonable oxidation rate. However, advantageously, the rate of oxidation of the present invention is greatly influenced by the pH of the reaction medium, such that under acidic, particularly strongly acidic conditions a good level of oxidation may be achieved even when employing small amounts of H₂O₂ or an organic peroxide, as opposed to oxidative systems based on TiO₂ catalysis which rely on increasing concentrations of catalyst and/or oxidizing agent to achieve increased oxidation. Additionally, high amounts of peroxide may not be desirable due to the explosive nature of peroxides, which is a factor which is taken into account particularly when carrying out oxidations at an industrial level, in addition to the cost of the peroxide. Therefore, the quantity of H₂O₂ or organic peroxide used for the purposes of the present invention can be as low as 0.001% H₂O₂ or organic peroxide by volume. Preferably, the quantity of H₂O₂ or organic peroxide is between 1 and 50 % H₂O₂ or organic peroxide by volume.

H₂O₂ or organic peroxide can be dosed to the reaction mixture. Specifically, the dose may be applied via small addition of the H₂O₂ or organic peroxide to solution at fixed intervals, or it may be obtained through continuous feeding of the H₂O₂ or organic peroxide to the solution.

The oxidation of the present invention may work in parallel to or together with additional oxidative systems and therefore may include additional oxidizing agents. Exemplary additional oxidizing agents include, but are not limited to, permanganates, dichromates, hypochlorous acid and its salts, sodium chlorite and chlorine dioxide, chlorate, peroxides, nitric acid and nitrogen tetroxide, nitrobenzene, ferric salts, copper salts, agents for alkaline fusion (e.g. Na₂O₂), arsenic acid, potassium ferricyanide, fuming sulfuric acid (oleum), ozone or combinations thereof.

Acids suitable for use in the oxidation of the present invention include organic or inorganic acids with a pKₐ of about 3 or lower. The use of acids with a pKₐ higher than 3 would in general require large amounts of acid to attain a desired acidic pH, especially when the pH of the reaction is strongly acidic, which would have several disadvantages: higher costs due to the higher consumption of acid; a higher concentration of the acid, which may lead to a higher probability of side-reactions competing with the oxidation reaction or which may be toxic to living organisms or detrimental for products subjected to the oxidation, not due to acidity but to reactivity of the acid species and in particular of the anion of the acid species. In line with these arguments, the inventors of the present invention have found and shown that the use of acids with a pKₐ higher than 3 leads to a lesser extent of oxidation when compared to the level of oxidation attained when acids with a pKₐ of about 3 or lower are employed, both oxidations being carried out at the same pH.

The term pKₐ as used herein is that generally recognised in the art, i.e. the pKₐ of an acid is the negative logarithm of the acid dissociation constant of the acid. The pKₐ value of different acids is known to the person skilled in the art. The present patent application refers only to pKₐ values of acids as measured in water. Polyprotic species with different pKₐ values, wherein at least one of the pKₐ values is about 3 or lower, also fall within the scope of the present invention.

Additionally, in the sense of the present invention, the acid may be a Brønsted-Lowry acid or a Lewis acid.

Illustrative non-limiting examples of acids suitable for use in the oxidation of the present invention are trifluoromethanesulfonic acid (pKₐ -14), perchloric acid (pKₐ -10), hydrochloric acid (pKₐ -8.0), sulfuric acid (pKₐ -3.0), nitric acid, (pKₐ -1.3), trifluoroacetic acid (pKₐ -0.25), chromic acid (pKₐ -0.1), sulfurous acid (pKₐ 1.9) or phosphoric acid (pKₐ 2.1).

Preferably, the acid is a mineral acid such as perchloric acid, sulfuric acid, hydrochloric acid, nitric acid, or phosphoric acid. More preferably, the acid is sulfuric acid, nitric acid or hydrochloric acid.

The oxidation of the present invention may include one or more acids, which may be independently either oxidizing acids or non-oxidizing acids.

The quantity of acid added to the reaction mixture is generally the amount necessary for achieving the desired reaction pH. Preferably, the reaction pH is between 1 and 6. More preferably, the reaction pH is between 2 and 4. Specific pH values in the present oxidation method are about 2, about 3 or about 4.These preferred values refer to cases in which catalyst leaching is undesired. Catalyst leaching is enhanced at low pH values.

However, in cases in which catalyst leaching is not an issue, the preferred pH of the reaction will be as low as possible. As shown in Example 1, oxidation rates in the method of the invention increase with decreasing pH. In a particular embodiment of the present invention, the reaction pH is between about 0.5 and about 3. Preferably the reaction pH is between about 1.5 and about 2.5. Specific preferred pH values are about 2.5, about 2, about 1.5, about 1 and about 0.5.

The oxidation of the present invention may be carried out in mild conditions of pressure and temperature. In other cases, however, said process may also be carried out at high pressure and temperature conditions. Preferably, the oxidation reaction takes place at a pressure range of from about 50 mbar to about 40 bar. More preferably, the oxidation reaction takes place at a pressure range of from about 1 to about 10 bar. Preferably, the oxidation reaction takes place at a temperature range of from about 0° to about 400°C. More preferably, the oxidation reaction takes place at a temperature range of from about 0° to about 200°C. Even more preferably, the oxidation reaction takes place at a temperature range of from about 15° to about 50°C. Most preferably, the oxidation reaction takes place at room temperature (between about 20°C and about 23.5°C).

The oxidation of the present invention may be applied to fluids, including liquids, gases, plasmas and, to some extent, plastic solids.

The oxidation of the present invention may be carried out under stirring, preferably under vigorous stirring. According to the Reynolds (Re) number, the fluid may flow in a laminar, transition or turbulent manner.

The oxidation of the present invention can take place in different polar and apolar solvents. Non-limiting exemplary polar solvents suitable for use in the oxidation system include water, acetic acid, acetonitrile or formic acid, carbon disulfide, pyridine, dimethyl sulfoxide (DMSO), n-propanol, ethanol, n-butyl alcohol, propylene glycol, ethylene glycol, triethylene glycol, dimethylformamide (DMF), methanol or any mixture thereof. Exemplary apolar solvents suitable for use in the oxidation system include, but are not limited to, decane, nonane, pentane, cyclopentane, benzene, toluene, 1,4-dioxane, chloroform, diethyl ether or any mixture thereof.

The oxidation of the present invention can be carried out in the presence of light, preferably in the presence of UV light, or in partial or complete darkness.

It has been found that high levels of oxygen greatly enhance the rate of oxidation in the method of the present invention. Therefore, the oxidation of the present invention preferably takes place in a system which is from about 80% to about 100% oxygen-saturated.

Substrates that may be oxidized through the present method include, but are not limited to, organic and inorganic pollutants such as dyes, pesticides, pharmaceuticals, herbicides, tire waste, oil and petroleum derivates, mine waste, battery waste, vegetable and animal by-products and other waste with hazardous properties. As regards the chemical structure of compounds that may be oxidized through the present method, these include, but are not limited to, alkanes, alkenes, alkynes, polyunsaturated compounds, alcohols, ketones, aldehydes, esters, acids, epoxides, cyclic compounds, aromatic compounds and heteroatom containing compounds such as compounds containing a halogen, a non-metal, or a transition metal from groups 3 to 12 of the periodic table of elements, or combinations thereof.

Preferably, the substrate to be oxidized through the method of the present invention is an unsaturated compound, partially oxidized compound or a compound with a non-metal element. More preferably, the substrate to be oxidized through the method of the present invention is a nitrogen or sulfur containing compound or an olefin. Exemplary compounds of the preferred substrates include, but are not limited to, amines, sulfides, sulfoxides, thiols and cyclic or short-chain olefins.

The oxidation method of the present invention may therefore be used in synthetic pathways to achieve the oxidation of starting materials or intermediates.

The oxidation method of the present invention may alternatively be used in the separation of at least a reaction product or by-product from a reaction mixture.

The present invention additionally relates to the use of the oxidation method of the invention to achieve an economical, effective and rapid treatment of industrial or urban wastewater contaminated with organic and/or inorganic substances, so as to destroy said substances or reduce the same preferably to a level below that which is considered detrimental to human use. Contaminants found in wastewater are varied and numerous. Exemplary contaminants present in wastewater are pharmaceuticals, pathogens, ammonia, pesticides and endocrine disruptors, all of which may be suitable substrates in the present invention, however the use of the oxidation method of the present invention is not limited to said contaminants.

The present invention further relates to the use of the oxidation method of the invention for oxidative desulfurization or denitrogenation, in particular for recovering sulfur and nitrogen from hydrocarbons present in petroleum and petroleum based products. Exemplary sulfur compounds present in hydrocarbon contaminants include sulfides, disulfides, mercaptans, as well as aromatic molecules such as thiophenes, benzothiophenes, dibenzothiophenes, as well as alkyl derivatives of said compounds. Exemplary, nitrogen compounds present in hydrocarbon contaminants include indoles, carbazoles, anilines, quinolones, acridines as well as alkyl derivatives of said compounds. All of said exemplary compounds may be suitable substrates in the present invention, however the use of the present invention is not limited to said compounds.

The present invention additionally relates to the use of the oxidation method of the invention for bleaching foodstuffs and improving the whiteness thereof. Furthermore, the oxidation method of the invention may be applied to reduce microbial and fungus contamination on food. The present invention also relates to a deodorant composition for sulfides, specifically on food, more specifically on meat. The oxidation method of the invention is further advantageous in that it comprises the use of titanium dioxide, a clear, generally white powder which does not itself negatively affect the whiteness of the foodstuffs and which is biocompatible.

The present invention further relates to the use of the oxidation method of the invention to bleach organic and/or inorganic fibers. The method of the invention is carried out at low pH, thus avoiding the disadvantages and drawbacks of bleaching processes that employ chlorinated compounds. In particular, the oxidation method of the invention can be used to improve wood and non-wood pulp brightness. Illustrative, non-limiting examples of pulps are groundwood pulps, bleached groundwood pulps, thermomechanical pulps, bleached thermomechanical pulps, chemi-thermomechanical pulps, deinked pulps, kraft pulps, bleached kraft pulps, sulfite pulps, and bleached sulfite pulps. The oxidation method of the invention is further advantageous in that it comprises the use of titanium dioxide, a clear, generally white powder which does not itself negatively affect the whiteness of the fiber.

The present invention additionally relates to the use of the oxidation method of the invention for improving the whiteness and/or appearance of teeth. In particular, the method of the present invention is applied to oxidize discoloring substances in food, beverages, tobacco, and salivary fluid that have penetrated the tooth enamel, particularly organic chromogenic substances. The oxidation method of the invention is further advantageous in that it comprises the use of titanium dioxide, a clear, generally white powder does not itself negatively affect the whiteness of the whitened teeth and which is biocompatible.

The present invention further relates to the use of the oxidation method of the invention for selective oxidation of hydrocarbons. The method of the invention provides a high reaction rate in mild and/or eco-friendly conditions, without pore limitations and reducing fouling problem, thus avoiding the disadvantages and drawbacks of other processes that employ titanium silicates or β-zeolite catalysts. In particular, the oxidation method of the invention is further advantageous in that it comprises the use of titanium dioxide, an extensive and easy to produce oxide, with low or no toxicity and reusable.

Having described the present invention in general terms, it will be more easily understood by reference to the following examples which are presented as an illustration and are not intended to limit the present invention.

### EXAMPLES

### Example 1. Degradation of Rhodamine B

Recalcitrant ink Rhodamine B, an organic compound difficult to oxidize by common AOPs (Advanced Oxidative Processes), was chosen as a representative substrate for the oxidation method of the invention. The degradation of said ink is of particular interest as it represents one of the main challenges encountered during the bleaching of recycled paper.

In order to fully demonstrate the potential of the oxidation of the invention, the oxidation of Rhodamine B was carried out in the absence of light. The walls of a beaker (Ǿ = 10 cm) were covered with aluminum foil to prevent any light exposure to the inside. A magnetic stirrer was introduced in a smaller beaker (Ǿ = 6.5 cm), which was then covered on the top with parafilm and a small hole was punched thereon. The smaller beaker was introduced concentrically into the larger one. To immobilize the inner beaker, a foam was placed between the walls of the two vessels. A cover of the same foam (Ǿ = 10 cm, 1.5 cm thick) was placed on the top of the larger beaker. In the cover, a hole (Ǿ = 0.5 cm) close to the inside wall of the inner beaker facilitated sample collection in the vortex formed during the agitation of the reaction mixture. A second hole situated on the opposite side of the first one was punched in order to facilitate pH measurements.

The catalytic reactor was placed on the stirrer (VMS-C4, VWR) at around 750 rpm. Then, the inner beaker was filled with the help of a funnel with the required amount of TiO₂. Immediately afterwards, the appropriate amount of 9.8 M H₂O₂ and deionised water, in each case, for a total volume of 20 mL, was introduced. The mixture was stirred for 1 minute, and 20 mL of the required concentration of Rhodamine B were then added. In the cases where an acid was employed, the corresponding amount of acid to achieve a particular pH was introduced in the reaction mixture before the addition of Rhodamine B. After 3 minutes stirring, an aliquot of 1 mL was taken through a plastic Pasteur pipette and was introduced in an Eppendorf tube (1.5 mL). The sample was centrifugated (Mikro 120, Hettich Zentrifugen) at 14000 rpm for 1 minute. The supernatant was centrifugated again under the same conditions and the remaining supernatant was placed in a 1.5 mL cuvette for analysis in a spectrophotometer (Du 730, Beckman Coulter). The analyzed peaks, the intensity of which correlates to the amount of Rhodamine B present in the mixture, are situated at 554 and 520 nm. Finally, the TiO₂ and the liquid were reintroduced into the inner beaker. The procedure, starting with the 1 mL aliquot extraction, was repeated (at least) every 3 min for a maximum of 2 h. The experiment was repeated 4 times for every imposed condition. Fluctuations in pH throughout the experiments were in no case larger than ±0.1 units.

Linear regressions were conducted with the obtained data. The reaction order selected was one as is common with AOPs and because it fitted the data obtained well. The kinetic constant of the reaction was the parameter used to compare the oxidative capacity of the different oxidation conditions in the method of the invention.

Table 1 shows the kinetic reaction constant for a method of oxidation including no acid and for the method of oxidation of the present invention in the presence of different acids. Amounts of acid added were in each case those necessary to achieve a pH of 2.0 throughout the reaction.

**Table 1. Rate constants for degradation kinetics of 0.025 mM Rhodamine B in the presence of 30g/L of TiO₂ (aeroxide P90) and 5% H₂O₂ solution in the absence of acid and in the presence of different acids at a pH of 2.**

| Acid | **(k₅₄₄/min⁻¹)** | **pH** |
|---|---|---|
| **No acid** | 0.0903±*0.0061* | 2.6 |
| **Hydroclorhic** | 0.1260±*0.0173* | 2.0 |
| **Nitric** | 0.1067±*0.0094* | |
| **Perchloric** | 0.1194±*0.0095* | |
| **Sulfuric** | 0.1124±*0.0112* | |

Table 2 shows the kinetic reaction constant for the method of oxidation of the present invention in the presence of different acids at pH 2.0 and pH 1.5.

**Table 2. Rate constants for degradation kinetics of 0.025 mM Rhodamine B in the presence of 30g/L of TiO₂ (aeroxide P90), 5% H₂O₂ solution and different acids at a pH of 2.0 and 1.5.**

| | pH 2.0 | pH 1.5 |
|---|---|---|
| Acid | **(k₅₅₄/min⁻¹)** | **(k₅₅₄/min⁻¹)** |
| **Hydrochloric** | 0.1260±*0.0173* | 0.3370±*0.0990* |
| **Nitric** | 0.1067±*0.0094* | 0.3010±*0.0150* |
| **Perchloric** | 0.1194±*0.0095* | 0.3550±*0.1180* |
| **Sulfuric** | 0.1124±*0.0112* | 0.2360±*0.0430* |

### Example 2. Comparative effects of acids on reaction kinetics

In a further experiment, the effect on reaction kinetics of acids with a pKₐ of 3 or lower was compared to that of acids with a pKₐ of above 3 at a given pH.

**Table 3. Rate constants for degradation kinetics of 0.050 mM Rhodamine B in the presence of 10g/L of TiO₂ (aeroxide P90), 5% H₂O₂ solution and different acids at a pH of 2.**

| Acid | **pKₐ** | **(k₅₄₄/min⁻¹)** |
|---|---|---|
| **Hydrochloric** | -8.0 | 0.0391±*0.0105* |
| **Nitric** | -1.3 | 0.0351±*0.0026* |
| **Oxalic** | 1.2 | 0.0338±*0.0033* |
| **Perchloric** | -10.0 | 0.0318±*0.0021* |
| **Sulfuric** | -3.0 | 0.0293±*0.0021* |
| **Formic** | 3.7 | 0.0263±*0.0035* |
| **Acetic** | 4.8 | 0.0164±*0.0040** |

| | | |
|---|---|---|
| **It was not possible to reach the desired pH due to side-reactions between H₂O₂ and acetic acid. The final pH in this case was 2.5.* | | |

Higher oxidation rates are achieved at a pH of 2 when employing acids with a pKₐ of 3 or lower. Although acids with a pKₐ over 3 may also be employed to still achieve good oxidation kinetics, as shown in Table 3 for formic acid (pKₐ of 3.7), these acids generally require addition of large amounts thereof in order to achieve low pH values, which leads to unacceptable higher reagent consumption costs, especially at the industrial scale. Additionally, the use of large quantities of acid can lead to undesired side-reactions that compete with the oxidation reaction, as noted above for acetic acid (pKₐ 4.7). In other cases, the pKₐ of the acid is not strong enough to even attain a desired low pH.

### Example 3. Effect of oxygen saturation on reaction kinetics

The inventors have surprisingly found that the amount of oxygen present in the reaction mixture affects the rate of the oxidation of the present invention. Analysed reaction mixture samples according to the procedure described in Example 1 are reintroduced in the reaction mixture by pipetting, which occurs with a concomitant introduction of air into the reaction system.

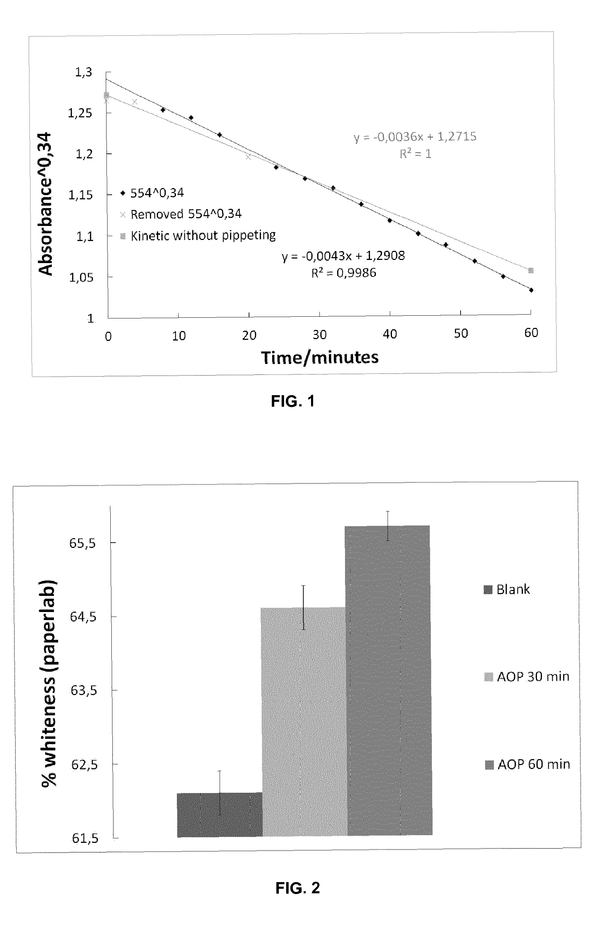

Figure 1 shows the reaction kinetics for two differently treated reaction mixtures. The accuracy of the reaction order was enhanced to be adjusted to 0.66 in this case, in order to improve the graph's sensitivity. The absorbance of Rhodamine B present in the mixture at each time point was employed to determine rate of oxidation. The first mixture was supplied with oxygen throughout the reaction at regular intervals by extracting samples and reintroducing them into the reaction mixture. The second mixture was not supplied with oxygen throughout the reaction, i.e. only samples of the initial and final mixture were taken. In the case of the first mixture (mixture supplied with oxygen), the first two points corresponding to the first two samples taken were eliminated from the plot because they did not fit the line (removed points marked with an "x" on the graph). This is because the presence of oxygen in the system was lower at the first two points as compared to the later points. The kinetic constant for the reaction supplied with oxygen was about 15% greater than that of the reaction not supplied with oxygen.

### Example 4. Paper bleaching

The oxidation method of the invention was applied to pulp samples in order to prove the usefulness of said method in the paper bleaching industry.

Pulp samples obtained from the bleaching industry were pre-treated to remove any CaCO₃ present in the samples that could interfere with the oxidation of the pulp.

The oxidation reaction was performed in a plastic vessel (1 L). The pre-treated pulp was added, followed by 162 mL H₂O and 1 g TiO₂ UV 100 (Sachtleben). The mixture was then stirred for a few minutes with a hydraulic stirrer at 300 rpm until the mixture was homogeneous. Once the mixture was homogeneous, 34 mL H₂O₂ 30% (Prolabo) and the amount of HNO₃ needed to attain a final pH of about 3 in dissolution were added. The mixture was stirred for 30 or 60 minutes. The blank test was carried out according to this same procedure, but substituting the H₂O₂ with water.

Once the oxidation reaction reached completion, the mixture was transferred to a fiber disintegrator (Lhomargy DI 01) and diluted with water up to a volume of 0.5 L. The reaction mixture was disintegrated at 3000 rpm. Sheets of paper of a particular grammage (in this case 100 g/m²) were then formed from the disintegrated mixture. Each sheet obtained was dried and the whiteness percentage of the dried sheet was measured employing a Paperlab (Metso) machine. Whitening results are shown in Figure 2. As can be observed, pulp treated with the oxidation method of the present invention leads to sheets of paper of a greater whiteness as compared to sheets of paper obtained from pulp treated according to the blank test.

### Example 5. Oxidative desulfurization

The oxidation method of the invention was applied to hydrocarbon samples polluted with sulfur compounds in order to prove the usefulness of said method in the petroleoum industry.

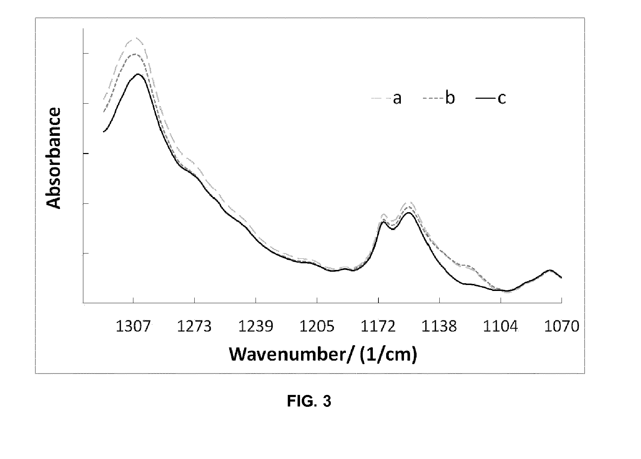

A hydrocarbon solution (100 mL) containing a known amount of sulfur compounds (R₂SO₂ and RSO₂OH; determined by Fourier-transform infrared spectroscopy (FTIR)) was mixed with 4g of TiO₂ (aeroxide P 90, catalyst amount determined according to the amount of sulfur compounds present in the sample), and the reaction mixture was stirred until homogeneous. 1.78 µL of a previously prepared solution containing 5 µL HNO₃ 65%_{w} and 9mL H₂O₂ (Prolabo) 30%_{w} were then added and the oxidation reaction was allowed to proceed for 60 minutes. Samples from the reaction mixture were then placed in two tubes (50 mL) and centrifugated at 9000 rpm for 1 minute. After the operation, the catalyst particles were found agglomerated at the bottom of the tubes and were separated from the hydrocarbon liquid. Finally, the sample was analyzed again by FTIR. The analyzed peaks observed were the following (see Figure 3):
- Asymmetric stretch (around 1303 cm⁻¹). R₂SO₂.
- Symmetric stretch (around 1126 cm⁻¹). R₂SO₂.
- Symmetric stretch (around 1153 cm⁻¹). RSO₂OH.

It was observed that hydrocarbon samples oxidized through the method of the present invention contained a greater amount of oxidized sulfur compounds (Figure 3, a) when compared to samples oxidized in the absence of acid (Figure 3, b). Samples without treatment i.e. not subjected to oxidizing conditions (Figure 3, c) accordingly showed the least amount of oxidized sulfur compounds.

## Claims

1. A method for oxidizing a substrate, said method comprising the use of:
- a heterogeneous titanium dioxide catalyst;
- hydrogen peroxide or an organic peroxide; and
- an acid, wherein the pKₐ of the acid is about 3 or lower.

2. A method according to claim 1, wherein the oxidation takes place in the absence of light.

3. A method according to any of the preceding claims, wherein the titanium dioxide catalyst has a surface area in the system in the range from 10 to 1000 m²/L.

4. A method according to any of claims 1 or 2, wherein the method additionally comprises the use of a dispersing agent and wherein the titanium dioxide catalyst has a surface area in the system in the range from 5,000 to 1,000,000 m²/L.

5. A method according to any of the preceding claims, wherein at least about 40% of the surface of the titanium dioxide catalyst is a hydroxylated surface.

6. A method according to any of the preceding claims, wherein at least about 20% of the surface of the titanium dioxide catalyst represents Lewis-acid sites.

7. A method according to any of the preceding claims, wherein at least about 5% of the surface of the titanium dioxide catalyst represents low coordination sites.

8. A method according to any of the preceding claims, wherein the acid is sulfuric acid, nitric acid or hydrochloric acid.

9. A method according to any of the preceding claims, wherein the oxidation takes place in a system which is from about 80% to about 100% oxygen-saturated.

10. Use of the method according to any one of the preceding claims for the degradation of organic and/or inorganic compounds in wastewater.

11. Use of the method according to any one of claims 1 to 9 for oxidative desulfurization or denitrogenation.

12. Use of the method according to any one of claims 1 to 9 for bleaching organic and/or inorganic fibers.

13. Use of the method according to any one of claims 1 to 9 for improving the whiteness and/or appearance of food.

14. Use of the method according to any one of claims 1 to 9 for improving the whiteness and/or appearance of teeth.

15. Use of the method according to any one of claims 1 to 9 for selective oxidation of hydrocarbons.
